# EUROPÄISCHE PATENTSCHRIFT

(11) **EP 4 488 084 B1**
(45) Veröffentlichungstag und Bekanntmachung des Hinweises auf die Patenterteilung: **19.08.2026**
(21) Anmeldenummer: 23182960.7
(22) Anmeldetag: 03.07.2023
(51) Int. Cl.: B60H 1/32, B60H 1/00

(54) **TRANSPORTKÄLTEMASCHINE MIT KÄLTE- UND KÜHLKREISLAUF SOWIE NUTZFAHRZEUG MIT TRANSPORTKÄLTEMASCHINE**
TRANSPORT REFRIGERATION MACHINE WITH COOLING AND COOLING CIRCUIT AND COMMERCIAL VEHICLE WITH TRANSPORT REFRIGERATION MACHINE
MACHINE FRIGORIFIQUE DE TRANSPORT DOTÉE D'UN CIRCUIT DE REFROIDISSEMENT ET DE REFROIDISSEMENT AINSI QUE VÉHICULE UTILITAIRE DOTÉ D'UNE MACHINE FRIGORIFIQUE DE TRANSPORT

(43) Veröffentlichungstag der Anmeldung: 08.01.2025
(73) Patentinhaber: Schmitz Cargobull AG, 48341 Altenberge (DE)
(72) Erfinder: FLACKE, Norbert, 45894 Gelsenkirchen (DE); TENBROCK, Rolf, 48683 Ahaus (DE); HOLTKAMP, Christian, 48153 Münster (DE); WANTIA, Sebastian, 48691 Vreden (DE); HUES, Patrick, 48565 Steinfurt (DE)
(74) Vertreter: Cohausz & Florack

(56) Entgegenhaltungen:
- EP-A1- 3 943 321
- WO-A1-2014/047401
- WO-A1-2020/101905

## Beschreibung

Die Erfindung betrifft eine Transportkältemaschine zur Kühlung eines Kofferaufbaus eines Nutzfahrzeugs, insbesondere eines Lastkraftwagens, eines Anhängers oder eines Sattelaufliegers, mit einem Kältekreislauf zur Kreislaufführung eines Kältemittels, mit einer Elektronikeinheit zum Betreiben des Kältekreislaufs und mit einem Kühlkreislauf zum Kühlen der Elektronikeinheit, wobei der Kältekreislauf einen Verdampfer zum Verdampfen des Kältemittels, einen Verdichter zum Verdichten des im Verdampfer verdampften Kältemittels, einen Kondensator zum Kondensieren des im Verdichter verdichteten Kältemittels und eine Drossel zum Entspannen des im Kondensator kondensierten Kältemittels umfasst, wobei der Kühlkreislauf ein Kühlmittel, eine Pumpe zum Umpumpen des Kühlmittels im Kühlkreislauf und einen Kühler zum Kühlen des Kühlmittels umfasst und wobei der Kondensator und der Kühler zur Anströmung von Kühlluft in einer Anströmrichtung angeordnet sind. Ferner betrifft die Erfindung ein Nutzfahrzeug, insbesondere Lastkraftwagen, Anhänger oder Sattelauflieger, mit einem Kofferaufbau und einer an einer Stirnwand des Kofferaufbaus vorgesehenen Transportkältemaschine zum Kühlen wenigstens eines in dem Kofferaufbau vorgesehenen Laderaums.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem geschäumten Kunststoff gebildet wird. Dabei können die innere und/oder die äußere Decklage selbst bedarfsweise mehrlagig aufgebaut sein. Durch die hohe thermische Isolationswirkung der Kernlage aus geschäumtem Kunststoff bieten sich entsprechende Kofferaufbauten zum Transportieren von zu kühlender Ladung an, wozu an den Stirnwänden der Kofferaufbauten Transportkältemaschinen montiert sind. Die Transportkältemaschinen saugen Luft aus dem Laderaum an, kühlen diese herunter und blasen die gekühlte Luft wieder in den Laderaum hinein. Um mehrere Zonen des Laderaums bedarfsweise unabhängig voneinander zu kühlen, können an der Decke in entsprechenden Zonen der Laderäume sogenannte Deckenverdampfer vorgesehen sein, die von der Transportkältemaschine mit Kältemittel versorgt werden.

Die Transportkältemaschinen sind typischerweise von einem Gehäuse an der Stirnwand nach vorne und zur Seite abgegrenzt. In den Transportkältemaschinen ist zudem ein Kältekreislauf mit einem Verdampfer vorgesehen. In dem Verdampfer wird ein zuvor über eine Drossel entspanntes Kältemittel verdampft, wobei das Kältemittel über eine Wärmetauscherfläche Wärme von der Luft des Laderaums aufnimmt. Das Kältemittel wird sodann verdichtet und in einem Kondensator kondensiert, wozu der Kondensator ebenfalls eine Wärmetauscherfläche aufweist, so dass die beim Kondensieren des Kältemittels freiwerdende Wärme an die Umgebung abgeführt werden kann.

Der Kühlkreislauf umfasst dagegen eine Pumpe zum Umpumpen eines Kühlmittels im Kühlkreislauf und einen Kühler zum Abgeben der von dem Kühlmittel von der Elektronik aufgenommenen Wärme an die Umgebung. Zum Abgeben von Wärme mit dem Kondensator und dem Kühler sind der Kondensator und der Kühler so in der Transportkältemaschine angeordnet, dass der Kondensator und der Kühler von Kühlluft angeströmt werden kann. Das Anströmen des Kondensators und des Kühlers kann durch den Fahrtwind zwangsweise erfolgen oder durch wenigstens ein Gebläse erzwungen werden.

Eine beispielhafte Transportkältemaschine wird in Dokument WO 2014/047401 A1 gezeigt.

Durch die Anordnung des Kondensators in Anströmrichtung der Kühlluft vor dem Kühler soll es möglich sein, einerseits eine hohe Kühlleistung der Transportkältemaschine bereitzustellen und andererseits eine hinreichende Kühlung der Elektronikeinheit sicherzustellen. Diesbezüglich besteht aber weiterer Verbesserungsbedarf, zumal die Transportkältemaschinen zunehmend elektrisch betrieben werden und daher anderen Anforderungen ausgesetzt sind.

Daher liegt der vorliegenden Erfindung die Aufgabe zugrunde, die Transportkältemaschine und das Nutzfahrzeug jeweils der eingangs genannten und zuvor näher erläuterten Art derart auszugestalten und weiterzubilden, dass ein verbessertes Wärmemanagement erreicht werden kann.

Diese Aufgabe ist bei einer Transportkältemaschine nach dem Oberbegriff von Anspruch 1 dadurch gelöst, dass der Kühler in der Anströmrichtung der Kühlluft gesehen wenigstens abschnittsweise vor wenigstens einem Abschnitt des Kondensators vorgesehen ist.

Die genannte Aufgabe ist ferner bei einem Nutzfahrzeug nach dem Oberbegriff von Anspruch 10 dadurch gelöst, dass die Transportkältemaschine nach einem der Ansprüche 1 bis 9 ausgebildet ist.

Durch die Anordnung des Kühlers in der Anströmrichtung der Kühlluft, wenigstens abschnittsweise vor dem wenigstens einen Teil des Kondensators, wird eine höhere Kühlleistung hinsichtlich der Kühlung der Elektronikeinheit bereitgestellt, ohne die Kühlleistung hinsichtlich des Kondensators übermäßig zu beeinträchtigen. Es ist also eine Abkehr von der bisherigen Ausgestaltung der Transportkältemaschinen vorgenommen und gezeigt worden, dass diese Neuerung zu einer verbesserten Kühlung der Transportkältemaschine insgesamt führt. Entsprechende Transportkältemaschinen haben zudem den Vorteil einer sehr kompakten Bauart, gegenüber Transportkältemaschinen, bei denen zur Verbesserung der Kühlleistung insgesamt der Kondensator und der Kühler nebeneinander im Strom der Kühlluft angeordnet sind.

Unter der Kühlluft wird bevorzugt die Luft in der Umgebung zur Transportkältemaschine angesehen werden. Während der Fahrt des Nutzfahrzeugs kommt mithin der Fahrtwind als Kühlluft in Frage, der durch eine geeignete Ausgestaltung der Transportkältemaschine zum Kühler und zum Kondensator geleitet werden kann. Hierzu weist das Gehäuse der Transportkältemaschine beispielsweise geeignete Kühllufteinlässe auf.

Hinsichtlich der Elektronikeinheit ist anzumerken, dass die verwendete Begrifflichkeit "Elektronik" nicht zwingend eine Abgrenzung zu dem Begriff "Elektrik" implizieren soll. Unter der Elektronikeinheit soll vielmehr insbesondere eine Einheit verstanden werden, die wenigstens eine Elektronikbaugruppe und/oder wenigstens eine Elektrikbaugruppe aufweist. Erfindungsgemäß kommt es mithin nicht unbedingt darauf an, ob es sich bei der Elektronikeinheit tatsächlich um eine solche umfassend Elektronikbaugruppen oder elektrische Baugruppen handelt. Ganz allgemein kann die Elektronikeinheit in einem Elektronikgehäuse untergebracht sein, wobei es sich bei dem Elektronikgehäuse tatsächlich auch wenigstens in Teilen um ein Elektrikgehäuse handeln kann. Der besseren Verständlichkeit halber und zur Vermeidung von unnötigen Wiederholungen wird im Folgenden stets von einer Elektronikeinheit und einem Elektronikgehäuse gesprochen, auch wenn der Begriff "Elektronik" hierbei nicht zwingend im klassischen Sinne zu verstehen sein muss. Zudem kann das Elektronikgehäuse bedarfsweise auch als eine Art Schaltschrank angesehen werden, in dem entsprechende Baugruppen zusammengefasst und mit Baugruppen außerhalb des Elektronikgehäuses und bedarfsweise auch außerhalb der Transportkältemaschine verbunden sind.

Bei einer ersten besonders bevorzugten Ausgestaltung der Transportkältemaschine weist die Elektronikeinheit wenigstens ein Ladegerät und/oder wenigstens einen Frequenzumrichter auf. Diese Bauteile sind bei der Ausbildung von elektrisch betriebenen Transportkältemaschinen von besonderer Bedeutung, da elektrische Transportkältemaschinen über eine Batterie angetrieben werden, wobei der Betrieb der Transportkältemaschine eine Wechselspannung erfordert, obschon die Batterie eine Gleichspannung zur Verfügung stellt. Es hat sich zudem gezeigt, dass sich Ladegeräte und/oder Frequenzumrichter im Betrieb der Transportkältemaschinen erheblich erwärmen und daher einer zuverlässigen und intensiven Kühlung bedürfen, um leistungsfähig zu bleiben. Mithin kommen die erfindungsgemäß erzielbaren Vorteile insbesondere bei einer entsprechenden Transportkältemaschine zum Tragen.

Das gleiche gilt für Transportkältemaschinen, deren Ladegerät einen Laderegler und ein Netzteil aufweisen. Der Laderegler stellt dabei sicher, dass das Laden der Batterie in vorbestimmter Weise erfolgt, während das Netzteil eine Wandlung und Stabilisierung der Spannung auf ein anderes Spannungsniveau als das der für das Laden eingesetzten Spannung besorgt. Für das Laden der Batterie kann beispielsweise eine aus einem externen Stromnetz bezogene Spannung oder eine vom Nutzfahrzeug während des Fahrens selbst erzeugte Spannung genutzt werden.

Hinsichtlich des Frequenzumrichters bietet es sich alternativ oder zusätzlich an, wenn der Frequenzumrichter ein bidirektionaler Frequenzumrichter ist. In diesem Fall kann der Frequenzumrichter beispielsweise die Gleichspannung der Batterie in eine Wechselspannung zum Betrieb der Transportkältemaschine sowie eine Wechselspannung zum Laden der Batterie in eine Gleichspannung wandeln.

Um die Kühlleistung bezogen auf den Kühler und den Kondensator zu erhöhen, bietet es sich an, wenn der Kühler und der Kondensator saugseitig zu wenigstens einem Gebläse angeordnet sind. Das Gebläse, bei dem es sich vorzugsweise um ein Axiallüfter handeln kann, das einen hohen Volumenstrom bei geringem Platzbedarf bereitstellt, ermöglicht es stets eine hinreichende Menge an Kühlluft durch den Kühler und den Kondensator strömen zu lassen. Da der Kühler und der Kondensator saugseitig zu dem wenigstens einen Gebläse angeordnet sind, wird die Kühlluft durch den Kühler und den Kondensator gesaugt. Denkbar wäre aber auch eine Umkehrung dieses Prinzips, indem der Kühler und der Kondensator druckseitig zu dem wenigstens einen Gebläse angeordnet sind. Das wenigstens eine Gebläse kann Teil einer Gebläseeinheit sein, und zwar insbesondere dann, wenn mehr als ein Gebläse vorgesehen ist.

Konstruktiv einfach und besonders wirksam ist es hinsichtlich der Kühlung mittels Kühlluft, wenn der Kühler und/oder der Kondensator wenigstens im Wesentlichen aus untereinander verbundenen, parallelen und voneinander beabstandeten Rohren gebildet ist. Entsprechende Rohrbündelwärmetauscher sind besonders zweckmäßig. Um die Wärmetauscherfläche zu erhöhen und dennoch eine kompakte Bauform zu ermöglichen, können die parallelen Rohre des Kühlers und/oder des Kondensators in mehreren in Anströmrichtung der Kühlluft hintereinander angeordneten Ebenen angeordnet sein.

Als besonders zweckmäßig und platzsparend hat es sich zudem erwiesen, wenn die durch die parallelen Rohre gebildeten Ebenen des Kühlers und des Kondensators parallel zueinander angeordnet sind. Mithin weisen Kühler und Kondensator bedarfsweise parallele Ebenen von Kühlrohren auf. Die Ebenen von Kühlrohren sind aus Effizienzgründen zusätzlich oder alternativ wenigstens im Wesentlichen rechtwinklig zur Anströmrichtung ausgerichtet.

Für eine kompakte und dennoch effiziente Bauform der Transportkältemaschine bietet es sich im Übrigen an, wenn der Kühler und der Kondensator in der Anströmrichtung gesehen wenigstens im Wesentlichen überdeckend zueinander angeordnet sind. Wenn der Kondensator zusätzlich oder alternativ in der Anströmrichtung der Kühlluft lediglich abschnittweise hinter dem Kühler angeordnet ist, kann der übrige Teil des Kondensators direkt durch die Kühlluft in der Anströmrichtung angeströmt werden, ohne dass die Kühlluft zunächst durch den Kühler strömt und damit erwärmt wird. Mithin kann so eine ausreichende Kühlung des Kondensators sichergestellt werden.

Um eine Transportkältemaschine mit kompakten Abmessungen bereitstellen zu können, bietet es sich unabhängig davon an, wenn der Kühler und der Kondensator wenigstens im Wesentlichen die gleiche Breite aufweisen. Der Kühler kann dann einfach teilweise überdeckend zu dem Kondensator angeordnet werden. Für eine wenigstens teilweise direkte Anströmung des Kondensators durch die Kühlluft in Anströmrichtung kann es jedoch zweckmäßig sein, wenn der Kühler und der Kondensator eine unterschiedliche Höhe aufweisen.

Aus grundsätzlichen Effizienz- und Kostenkriterien bietet es sich allgemein an, wenn es sich bei dem Kühlmittel des Kühlkreislaufs wenigstens im Wesentlichen um Wasser handelt, wobei es sich bei dem Kältemittel des Kältekreislaufs vorzugsweise um ein synthetisches Kältemittel handeln kann.

Bei einer ersten besonders bevorzugten Ausgestaltung des Nutzfahrzeugs ist eine Batterie zur Spannungsversorgung der Transportkältemaschine und/oder zum Speichern elektrischer Energie, insbesondere unterhalb des Kofferaufbaus, vorgesehen. In diesem Fall ist es nicht erforderlich eine Verbrennungsmaschine zum Antrieb eines Generators zu betreiben. Es kann auf die Verbrennungsmaschine und den Generator verzichtet werden. Die Transportkältemaschine kann vielmehr rein elektrisch betrieben werden. Bei derartigen Transportkältemaschinen kommen die zuvor beschriebenen Vorteile in besonderem Maße zum Tragen.

Wenn eine Drehstromsteckdose, etwa in Form einer CEE32-Buchse, oder ein Drehstromstecker, etwa in Form einer CEE32-Steckers, an der Transportkältemaschine oder an dem Nutzfahrzeug vorgesehen ist, kann die Drehstromsteckdose zum Betreiben der Transportkältemaschine genutzt werden, während das Nutzfahrzeug nicht bewegt wird. Gleichzeitig oder alternativ kann die Spannungsversorgung über ein externes Stromnetz zum Speichern von elektrischer Energie in der Batterie genutzt werden.

Wenn das Nutzfahrzeug eine mit einem Generator gekoppelte Achse zum Antreiben des Generators und Erzeugen eines elektrischen Stroms während der Fahrt des Nutzfahrzeugs aufweist, kann der so erzeugte Strom über den Frequenzumrichter in die Transportkältemaschine eingespeist werden. Der Frequenzumrichter erzeugt dann entweder einen Wechselstrom mit einer vorgegebenen Spannung und einer vorgegebenen Frequenz, um die Transportkältemaschine zu betreiben. Der Frequenzumrichter kann aber auch einen Gleichstrom erzeugen, um die Batterie des Nutzfahrzeugs zu laden.

Aus Effizienzgründen ist es bevorzugt, wenn die Spannung zwischen der Batterie, dem Ladegerät und/oder dem Frequenzumrichter zwischen 500 V und 900 V, vorzugsweise zwischen 600 V und 800 V, insbesondere zwischen 650 V und 750 V beträgt.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes erfindungsgemäßes Nutzfahrzeug mit einer erfindungsgemäßen Transportkältemaschine in einer perspektivischen Ansicht,
- Fig. 2: eine Vorderansicht auf die Stirnwand des Nutzfahrzeugs aus Fig, 1 mit der Transportkältemaschine,
- Fig. 3: das Detail III der Transportkältemaschine gemäß Fig. 2 in einer perspektivischen Ansicht und
- Fig. 4: ein Fließbild betreffend die Transportkältemaschine aus Fig. 2 und das Nutzfahrzeug aus Fig. 1.

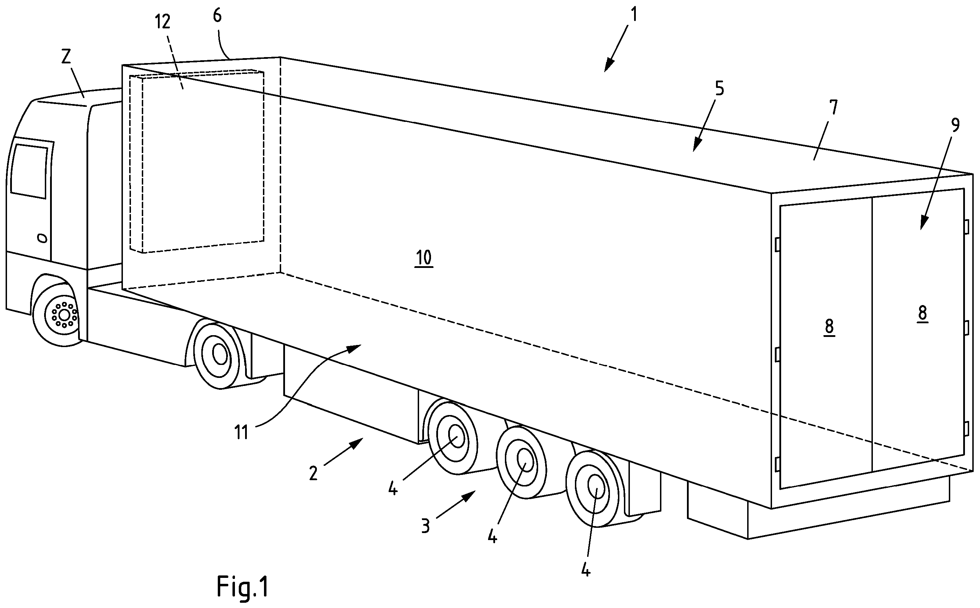

In der Fig. 1 ist ein von einer Zugmaschine Z gezogenes Nutzfahrzeug 1 in Form eines Sattelaufliegers dargestellt. Das Nutzfahrzeug 1 umfasst ein Chassis 2 und ein daran befestigtes Fahrwerk 3 umfassend drei separate Achsen 4. Von dem Chassis 2 wird zudem ein Kofferaufbau 5 mit einer festen Stirnwand 6, einem festen Dach 7, festen Rückwandtüren 8 an einer Rückwand 9 und festen Seitenwänden 10 getragen. Die Stirnwand 6, die Seitenwände 10 und das Dach 7 werden durch nicht näher dargestellte Paneele gebildet, welche eine äußere Decklage und eine innere Decklage aufweisen, zwischen denen eine Kernlage aus einem geschäumten Kunststoff vorgesehen ist. Bei der inneren Decklage und der äußeren Decklage handelt es sich um strukturgebende Decklagen, die auch jeweils mehrlagig ausgebildet sein können. Die Kernlage dient dabei primär der thermischen Isolierung eines im Kofferaufbau 5 vorgesehenen Laderaums 11.

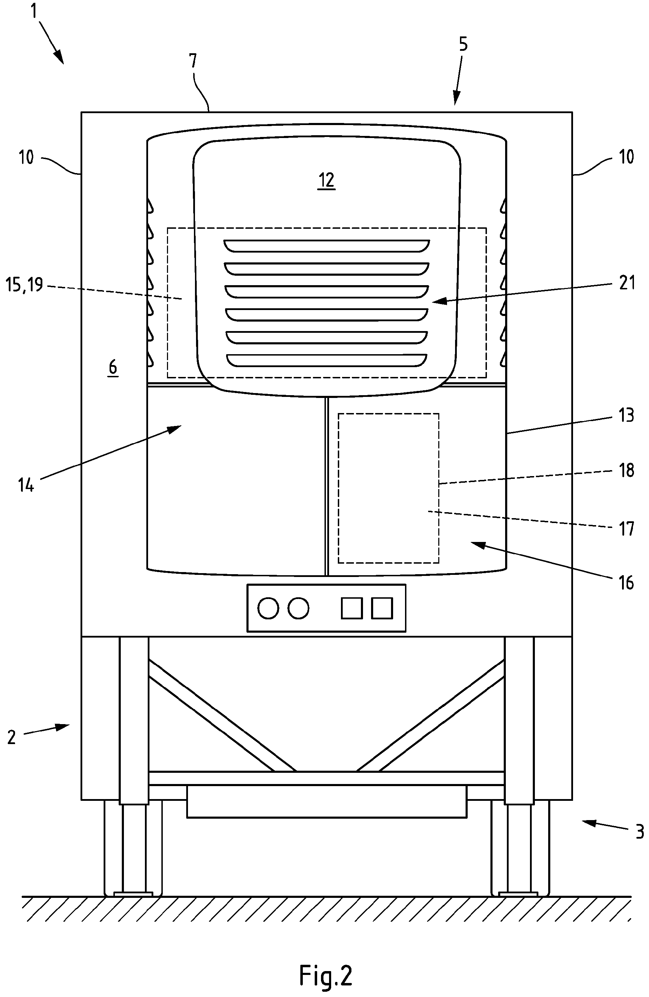

Um den Laderaum 11 des Kofferaufbaus 5 herunterkühlen zu können, ist an der Stirnwand 6 eine insbesondere in der Fig. 2 dargestellte Transportkältemaschine 12 montiert, welche von einem Gehäuse 13 umschlossen ist. Von der Transportkältemaschine 12 wird Luft aus dem Laderaum 11 angesaugt, abgekühlt und wieder zurück in den Laderaum 11 geblasen. Zu diesem Zweck weist die Transportkältemaschine 12 einen nicht näher dargestellten Kältekreislauf 14 auf, der an sich grundsätzlich bekannt und prinzipiell auch in anderen Transportkältemaschinen 12 vorgesehen ist. In dem Kältekreislauf 14 zirkuliert ein Kältemittel, von dem Wärme aufgenommen und an anderer Stelle wieder abgegeben werden kann. Der Kältekreislauf umfasst dabei einen Verdampfer zum Verdampfen des Kältemittels, einen Verdichter zum Verdichten des im Verdampfer verdampften Kältemittels, einen Kondensator 15 zum Kondensieren des im Verdichter verdichteten Kältemittels und eine dem Verdampfer vorgeschaltete Drossel zum Entspannen des im Kondensator 15 kondensierten Kältemittels. Das Kältemittel nimmt beim Verdampfen Wärme von der Luft im Laderaum 11 auf, die anschließend im Kondensator 15 beim Kondensieren des Kältemittels wieder an die Umgebung abgegeben wird. Zum Antrieb des Kältekreislaufs 14 und zum Anheben des Druckniveaus des Kältemittels ist der Verdichter vorgesehen. Um das Druckniveau des Kältemittels wieder zu senken und das Kältemittel wieder zu verdampfen, ist eine Drossel vorgesehen, die im konkreten Fall als ein Expansionsventil ausgebildet sein kann.

Die Transportkältemaschine 12 umfasst neben dem Kältekreislauf 14 noch einen Kühlkreislauf 16, der nicht dem Kühlen des Laderaums 11, sondern dem Kühlen der Transportkältemaschine 12 selbst dient, und zwar konkret dem Kühlen einer Elektronikeinheit 17 der Transportkältemaschine 12. Die Elektronikeinheit 17 ist dabei in einem Elektronikgehäuse 18 der Transportkältemaschine 12 aufgenommen und umfasst ein Ladegerät aus einem Netzteil und einem Laderegler sowie einen, insbesondere bidirektionalen, Frequenzumrichter. Diese Bauteile erwärmen sich während des Betriebs der Transportkältemaschine 12, weshalb deren Wärme über den Kühlkreislauf 16 aus dem Elektronikgehäuse 18 abgeführt werden kann. Der Kühlkreislauf 16 verläuft bei der dargestellten und insoweit bevorzugten Transportkältemaschine 12 teilweise im Elektronikgehäuse 18 und teilweise außerhalb des Elektronikgehäuses 18. Außerhalb des Elektronikgehäuses 18 ist eine Pumpe im Kühlkreislauf 16 angeordnet, wobei die Pumpe auch innerhalb des Elektronikgehäuses 18 angeordnet sein könnte. Die Pumpe sorgt dafür, dass das Kühlmittel im Kühlkreislauf 16 zirkuliert und durch den außerhalb des Elektronikgehäuses 18 angeordneten Kühler 19 strömt. Der Kühler 19 wird wie auch der Kondensator 15 des Kältekreislaufs 14 von Kühlluft aus der Umgebung angeströmt.

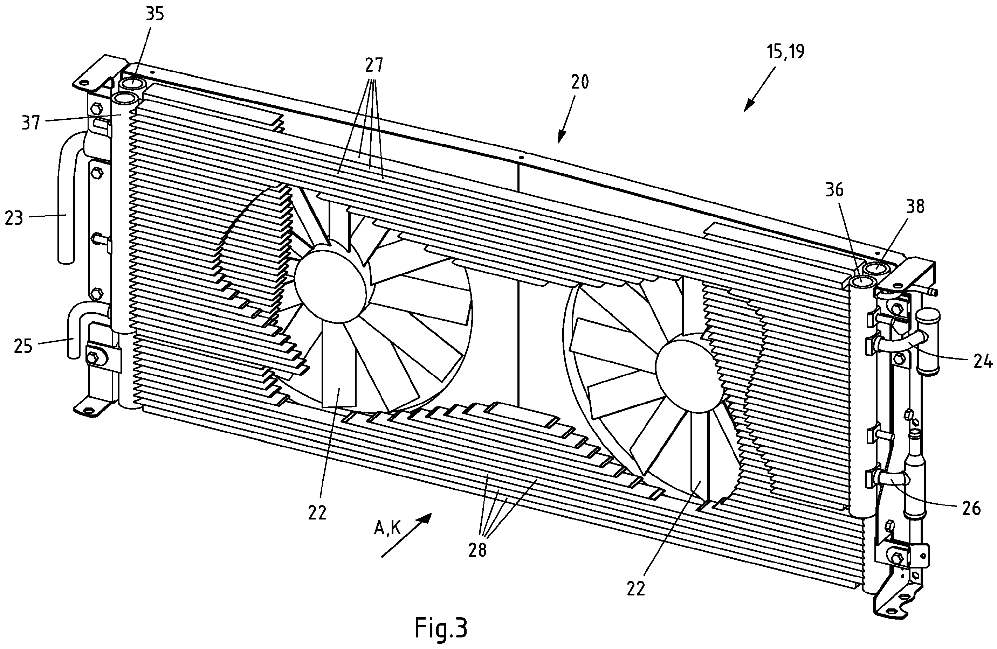

In der Fig. 3 ist der Kühler 19, der Kondensator 15 und eine Gebläseeinheit 20 der Transportkältemaschine 12 im Detail dargestellt. Die Gebläseeinheit 20 sitzt bei der dargestellten und insoweit bevorzugten Transportkältemaschine 12 in der Anströmrichtung A der Kühlluft K hinter dem Kühler 19 und dem Kondensator 15. Der Kühler 19 und der Kondensator 15 sind also auf der Saugseite der Gebläseeinheit 20 angeordnet, mit der Kühlluft K in der Anströmrichtung A durch den Kühler 19 und den Kondensator 15 gesaugt wird. Der Kühler 19 und der Kondensator 15 können auch während der Fahrt des Nutzfahrzeugs 1 durch Kühllufteinlässe 21 im Gehäuse 13 der Transportkältemaschine 12 in der Anströmrichtung A von Kühlluft K angeströmt werden, wenn die Gebläseeinheit 20 ausgeschaltet ist. Die dargestellte und insoweit bevorzugte Gebläseeinheit 20 wird jedoch bedarfsweise das Anströmen des Kühlers 19 und des Kondensators 15 unterstützen, um mehr Wärme über den Kühler 19 und den Kondensator 15 an die Kühlluft K abzuführen. Bei der dargestellten Gebläseeinheit 20 handelt es sich um eine solche, die zwei Axiallüfter 22 umfasst, welche nebeneinander hinter dem Kondensator 15 positioniert sind. Es könnte aber auch eine andere Anzahl und eine andere Art von Lüftern vorgesehen sein, wenngleich Axiallüfter im Allgemeinen als besonders bevorzugt anzusehen sind.

Der Kühler 19 und der Kondensator 15 umfassen jeweils einen Zuleitungskanal 23,24 und jeweils einen Ableitungskanal 25,26, die über eine Vielzahl von parallelen Rohren 27,28 miteinander verbunden sind. Im Zuleitungskanal 23,24 wird Kältemittel und das Kühlmittel zum Kühlen separat zugeführt und über Sammelrohre 35,36 auf die zugehörige Vielzahl an Rohren 27,28 verteilt. Das Kältemittel und das Kühlmittel strömen dann separat durch die jeweiligen Rohre 27,28, werden dabei von Kühlluft K in einer Anströmrichtung A von vorne angeströmt und somit abgekühlt. Die abgegebene Wärme wird von der Kühlluft K aufgenommen und abgeführt. Nach dem Abkühlen werden das Kältemittel und das Kühlmittel separat in den jeweiligen Sammelrohren 37,38 gesammelt sowie mittels Ableitungskanälen 25,26 abgeleitet. Das Kältemittel und das Kühlmittel strömen dann weiter in Strömungsrichtung durch den Kältekreislauf 14 und den Kühlkreislauf 16.

Die einzelnen Rohre 27,28 des Kühlers 19 und des Kondensators 15 sind bei der dargestellten und insoweit bevorzugten Transportkältemaschine 12 jeweils parallel zueinander angeordnet, also innerhalb des Kühlers 19, ebenso wie innerhalb des Kondensators 15. Die jeweiligen Rohre 27,28 bilden also eine Ebene des Kühlers 19 und eine Ebene des Kondensators 15, wobei die Ebene des Kühlers 19 und die Ebene des Kondensators 15 bei der dargestellten und insoweit bevorzugten Transportkältemaschine 12 parallel zueinander angeordnet sind.

In der Anströmrichtung A der Kühlluft K gesehen, ist der Kühler 19 vor dem Kondensator 15 vorgesehen. Zudem überdeckt der Kühler 19 den Kondensator 15 in der Anströmrichtung A ohne oben, unten oder seitlich gegenüber dem Kondensator 15 vorzustehen. Dies ist bevorzugt, aber nicht zwingend. Der dargestellte Kondensator 15 ist jedoch höher ausgebildet als der Kühler 19, so dass bei der dargestellten und insoweit bevorzugten Transportkältemaschine 12 der Kondensator 15 quer zur Anströmrichtung A und nach unten gegenüber dem Kühler 19 vorsteht. Die Breite des Kühlers 19 entspricht jedoch im vorliegenden Fall wenigstens im Wesentlichen der Breite des Kondensators 15.

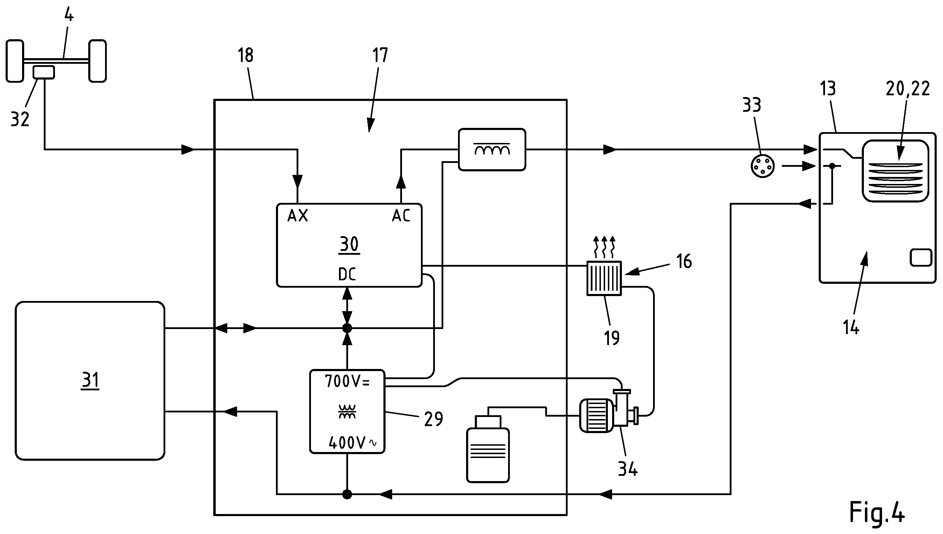

In der Fig. 4 ist ein schematisches Fließbild des Nutzfahrzeugs 1 und der Transportkältemaschine 12 dargestellt. In der Mitte der Fig. 4 ist ein Elektronikgehäuse 18 mit einer Elektronikeinheit 17 dargestellt, die ein Ladegerät 29 und einen Frequenzumrichter 30 umfasst. Es können grundsätzlich noch weitere Baugruppen oder auch andere Baugruppen in dem Elektronikgehäuse 18 vorgesehen sein, die ferner zur Elektronikeinheit 17 zählen können. Das Ladegerät 29 und der Frequenzumrichter 30 sind dabei mit einer außerhalb des Elektronikgehäuses 18, insbesondere unterhalb des Kofferaufbaus 5, am Nutzfahrzeug 1 vorgesehenen Batterie 31 verbunden. Zudem ist der Frequenzumrichter 30 mit einem Generator 32 verbunden, der mit einer Achse 4 des Nutzfahrzeugs 1 gekoppelt ist. Über die Achse 4 und den Generator 32 kann während der Fahrt des Nutzfahrzeugs 1 Strom erzeugt werden, der zum Antrieb der Transportkältemaschine 12 genutzt werden kann. Dafür wird jedoch zunächst mittels des Frequenzumrichters 30 ein Wechselstrom mit konstanter Frequenz erzeugt, da die Frequenz des vom Generator 32 erzeugten Stroms abhängig von der Rotationsgeschwindigkeit der Achse 4 bzw. des Generators 32 ist. Wenn das Nutzfahrzeug 1 steht, kann die Transportkältemaschine 12 über eine Drehstromsteckdose 33 an ein externes Stromnetz angeschlossen werden, um die Transportkältemaschine 12 mit Spannung zu versorgen. Die Drehstromsteckdose 33 ist an das Ladegerät 29 angeschlossen, mit dem die Batterie 31 des Nutzfahrzeugs 1 geladen werden kann. Zudem kann der von dem Generator 32 erzeugte Strom über den Frequenzumrichter 30 in einen Gleichstrom zum Laden der Batterie 31 gewandelt werden. Der Generator 32 und die Drehstromsteckdose 33 sind wie die Batterie 31 außerhalb des Elektronikgehäuses 18 angeordnet. Auch ist der Kältekreislauf 14 außerhalb des Elektronikgehäuses 18 angeordnet.

In dem Elektronikgehäuse 18 ist ein Teil des Kühlkreislaufs 16 vorgesehen, der thermisch mit dem Frequenzumrichter 30 und dem Ladegerät 29 gekoppelt ist, um diesen Baugruppen Wärme zu entziehen. Das auf diese Weise erwärmte Kühlmittel strömt dann in den außerhalb des Elektronikgehäuses 18 angeordneten Kühler 19, mit dem Wärme an die Kühlluft K abgegeben wird, bevor das so abgekühlte Kühlmittel mittels einer Pumpe 34 zurück in das Elektronikgehäuse 18 gepumpt wird. Der Kühler 19 ist dabei trotz seiner eher separaten Darstellung in der Fig. 4 bevorzugt ebenso wie das Elektronikgehäuse 18 Teil der Transportkältemaschine 12. Der Kühlkreislauf 16 ist also teilweise innerhalb des Elektronikgehäuses 18 und teilweise außerhalb des Elektronikgehäuses 18 vorgesehen.

### Bezugszeichenliste

- 1: Nutzfahrzeug
- 2: Chassis
- 3: Fahrwerk
- 4: Achsen
- 5: Kofferaufbau
- 6: Stirnwand
- 7: Dach
- 8: Rückwandtür
- 9: Rückwand
- 10: Seitenwand
- 11: Laderaum
- 12: Transportkältemaschine
- 13: Gehäuse
- 14: Kältekreislauf
- 15: Kondensator
- 16: Kühlkreislauf
- 17: Elektronikeinheit
- 18: Elektronikgehäuse
- 19: Kühler
- 20: Gebläseeinheit
- 21: Kühllufteinlässe
- 22: Axiallüfter
- 23,24: Zuleitungskanal
- 25,26: Ableitungskanal
- 27,28: Rohre
- 29: Ladegerät
- 30: Frequenzumrichter
- 31: Batterie
- 32: Generator
- 33: Drehstromsteckdose
- 34: Pumpe
- 35,36: Sammelrohr
- 37,38: Sammelrohr
- A: Anströmrichtung
- K: Kühlluft
- Z: Zugmaschine

## Patentansprüche

1. Transportkältemaschine (12) zur Kühlung eines Kofferaufbaus (5) eines Nutzfahrzeugs (1), insbesondere eines Lastkraftwagens, eines Anhängers oder eines Sattelaufliegers, mit einem Kältekreislauf (14) zur Kreislaufführung eines Kältemittels, mit einer Elektronikeinheit (17) zum Betreiben des Kältekreislaufs (14) und mit einem Kühlkreislauf (16) zum Kühlen der Elektronikeinheit (17), wobei der Kältekreislauf (14) einen Verdampfer zum Verdampfen des Kältemittels, einen Verdichter zum Verdichten des im Verdampfer verdampften Kältemittels, einen Kondensator (15) zum Kondensieren des im Verdichter verdichteten Kältemittels und eine Drossel zum Entspannen des im Kondensator (15) kondensierten Kältemittels umfasst, wobei der Kühlkreislauf (16) ein Kühlmittel, eine Pumpe (34) zum Umpumpen des Kühlmittels im Kühlkreislauf (16) und einen Kühler (19) zum Kühlen des Kühlmittels umfasst und wobei der Kondensator (15) und der Kühler (19) zur Anströmung von Kühlluft (K) in einer Anströmrichtung (A) angeordnet sind,
**dadurch gekennzeichnet, dass**
der Kühler (19) in der Anströmrichtung der Kühlluft (K) gesehen wenigstens abschnittsweise vor wenigstens einem Abschnitt des Kondensators (15) vorgesehen ist.

2. Transportkältemaschine nach Anspruch 1,
**dadurch gekennzeichnet, dass**
die Elektronikeinheit (17) wenigstens ein Ladegerät (29) und/oder einen Frequenzumrichter (30) umfasst.

3. Transportkältemaschine nach Anspruch 2,
**dadurch gekennzeichnet, dass**
das Ladegerät (29) einen Laderegler und ein Netzteil aufweist und/oder dass der Frequenzumrichter (30) ein bidirektionaler Frequenzumrichter (30) ist.

4. Transportkältemaschine nach einem der Ansprüche 1 bis 3,
**dadurch gekennzeichnet, dass**
der Kühler (19) und der Kondensator (15) saugseitig zu wenigstens einem Gebläse, Axiallüfter (22), zum Ansaugen von Kühlluft (K) jeweils wenigstens teilweise durch den Kühler (19) und den Kondensator (15) hindurch vorgesehen ist.

5. Transportkältemaschine nach einem der Ansprüche 1 bis 4,
**dadurch gekennzeichnet, dass**
der Kühler (19) und/oder der Kondensator (15) wenigstens im Wesentlichen aus untereinander verbundenen, parallelen und voneinander beabstandeten Rohren (27,28) gebildet ist und dass, vorzugsweise, die parallelen Rohre (27,28) des Kühlers (19) und/oder des Kondensators (15) in mehreren in Anströmrichtung (A) der Kühlluft (K) hintereinander angeordneten Ebenen angeordnet sind.

6. Transportkältemaschine nach Anspruch 5,
**dadurch gekennzeichnet, dass**
die durch die parallelen Rohre (27,28) gebildeten Ebenen des Kühlers (19) und des Kondensators (15) parallel zueinander angeordnet sind.

7. Transportkältemaschine nach einem der Ansprüche 1 bis 6,
**dadurch gekennzeichnet, dass**
der Kühler (19) und der Kondensator (15) in der Anströmrichtung (A) gesehen wenigstens im Wesentlichen überdeckend vorgesehen ist und/oder der Kondensator (15) in der Anströmrichtung (A) lediglich abschnittweise hinter dem Kühler (19) angeordnet ist.

8. Transportkältemaschine nach einem der Ansprüche 1 bis 7,
**dadurch gekennzeichnet, dass**
der Kühler (19) und der Kondensator (15) wenigstens im Wesentlichen die gleiche Breite aufweisen und/oder dass der Kühler (19) und der Kondensator (15) eine unterschiedliche Höhe aufweisen.

9. Transportkältemaschine nach einem der Ansprüche 1 bis 8,
**dadurch gekennzeichnet, dass**
es sich bei dem Kühlmittel des Kühlkreislaufs (16) wenigstens im Wesentlichen um Wasser handelt und/oder dass das Kältemittel des Kältekreislaufs (14) ein synthetisches Kältemittel ist.

10. Nutzfahrzeug (1), insbesondere Lastkraftwagen, Anhänger oder Sattelauflieger, mit einem Kofferaufbau (5) und einer an einer Stirnwand (6) des Kofferaufbaus (5) vorgesehenen Transportkältemaschine (12) zum Kühlen wenigstens eines in dem Kofferaufbau (5) vorgesehenen Laderaums (11),
**dadurch gekennzeichnet, dass**
die Transportkältemaschine (12) nach einem der Ansprüche 1 bis 9 ausgebildet ist.

11. Nutzfahrzeug nach Anspruch 10,
**dadurch gekennzeichnet, dass**
eine Batterie (31) zur Spannungsversorgung der Transportkältemaschine (12) und/oder zum Speichern elektrischer Energie unterhalb des Kofferaufbaus (5) vorgesehen ist.

12. Nutzfahrzeug nach Anspruch 10 oder 11,
**dadurch gekennzeichnet, dass**
eine Drehstromsteckdose (33) zum Betreiben der Transportkältemaschine (12) und/oder zum Speichern von elektrischer Energie in der Batterie (31) vorgesehen ist.

13. Nutzfahrzeug nach einem der Ansprüche 10 bis 12,
**dadurch gekennzeichnet, dass**
eine mit einem Generator (32) gekoppelte Achse (4) des Nutzfahrzeugs (1) zum Erzeugen eines elektrischen Stroms während der Fahrt des Nutzfahrzeugs (1) vorgesehen ist und dass, vorzugsweise, der Frequenzumrichter (30) zum Wandeln der erzeugten Wechselspannung des der Achse (4) zugeordneten Generators (32) in eine Wechselspannung mit konstanter Frequenz und/oder in eine Gleichspannung vorgesehen ist.

14. Nutzfahrzeug nach einem der Ansprüche 10 bis 13,
**dadurch gekennzeichnet, dass**
die Spannung zwischen der Batterie (31), dem Ladegerät (29) und/oder dem Frequenzumrichter (30) zwischen 500 V und 900 V, vorzugsweise zwischen 600 V und 800 V, insbesondere zwischen 650 V und 750 V beträgt.

## Claims

1. Transport refrigeration unit (12) for cooling a box body (5) of a utility vehicle (1), in particular a truck, a trailer or a semi-trailer, with a refrigeration circuit (14) for circulating a refrigerant, with an electronics unit (17) for operating the refrigeration circuit (14) and with a cooling circuit (16) for cooling the electronics unit (17), wherein the refrigeration circuit (14) comprises an evaporator for evaporating the refrigerant, a compressor for compressing the refrigerant evaporated in the evaporator, a condenser (15) for condensing the refrigerant compressed in the compressor and an expansion valve for expanding the refrigerant condensed in the condenser (15), wherein the cooling circuit (16) comprises a coolant, a pump (34) for circulating the coolant in the cooling circuit (16) and a cooler (19) for cooling the coolant and wherein the condenser (15) and the cooler (19) are arranged for flow of cooling air (K) in a flow direction (A), **characterized in that**
the cooler (19), viewed in the flow direction of the cooling air (K), is provided at least in sections in front of at least one section of the condenser (15).

2. Transport refrigeration unit according to claim 1,
**characterized in that**
the electronics unit (17) comprises at least one charger (29) and/or one frequency inverter (30).

3. Transport refrigeration unit according to claim 2,
**characterized in that**
the charger (29) has a charge controller and a power supply unit and/or that the frequency inverter (30) is a bidirectional frequency inverter (30).

4. Transport refrigeration unit according to one of claims 1 to 3,
**characterized in that**
the cooler (19) and the condenser (15) are provided on the suction side of at least one blower, axial fan (22), for drawing in cooling air (K) respectively at least partially through the cooler (19) and the condenser (15) .

5. Transport refrigeration unit according to one of claims 1 to 4,
**characterized in that**
the cooler (19) and/or the condenser (15) is formed at least substantially from mutually connected, parallel and mutually spaced tubes (27,28) and that, preferably, the parallel tubes (27,28) of the cooler (19) and/or of the condenser (15) are arranged in a plurality of planes arranged one behind the other in the flow direction (A) of the cooling air (K).

6. Transport refrigeration unit according to claim 5,
**characterized in that**
the planes of the cooler (19) and of the condenser (15) formed by the parallel tubes (27,28) are arranged parallel to one another.

7. Transport refrigeration unit according to one of claims 1 to 6,
**characterized in that**
the cooler (19) and the condenser (15), viewed in the flow direction (A), are provided so as to at least substantially overlap and/or the condenser (15) is arranged only in sections behind the cooler (19) in the flow direction (A).

8. Transport refrigeration unit according to one of claims 1 to 7,
**characterized in that**
the cooler (19) and the condenser (15) have at least substantially the same width and/or that the cooler (19) and the condenser (15) have a different height.

9. Transport refrigeration unit according to one of claims 1 to 8,
**characterized in that**
the coolant of the cooling circuit (16) is at least substantially water and/or that the refrigerant of the refrigeration circuit (14) is a synthetic refrigerant.

10. Utility vehicle (1), in particular truck, trailer or semi-trailer, with a box body (5) and a transport refrigeration unit (12) provided on a front wall (6) of the box body (5) for cooling at least one cargo space (11) provided in the box body (5), **characterized in that**
the transport refrigeration unit (12) is configured according to one of claims 1 to 9.

11. Utility vehicle according to claim 10,
**characterized in that**
a battery (31) for supplying power to the transport refrigeration unit (12) and/or for storing electrical energy is provided below the box body (5).

12. Utility vehicle according to claim 10 or 11,
**characterized in that**
a three-phase socket (33) for operating the transport refrigeration unit (12) and/or for storing electrical energy in the battery (31) is provided.

13. Utility vehicle according to one of claims 10 to 12,
**characterized in that**
an axle (4) of the utility vehicle (1) coupled to a generator (32) is provided for generating electrical current during travel of the utility vehicle (1) and that, preferably, the frequency inverter (30) is provided for converting the generated alternating voltage of the generator (32) assigned to the axle (4) into an alternating voltage with constant frequency and/or into a direct voltage.

14. Utility vehicle according to one of claims 10 to 13,
**characterized in that**
the voltage between the battery (31), the charger (29) and/or the frequency inverter (30) is between 500 V and 900 V, preferably between 600 V and 800 V, in particular between 650 V and 750 V.

## Revendications

1. Machine frigorifique de transport (12) pour le refroidissement d'une carrosserie caisse (5) d'un véhicule utilitaire (1), en particulier d'un camion, d'une remorque ou d'un semi-remorque, avec un circuit frigorifique (14) pour la circulation d'un fluide frigorigène, avec une unité électronique (17) pour le fonctionnement du circuit frigorifique (14) et avec un circuit de refroidissement (16) pour le refroidissement de l'unité électronique (17), où le circuit frigorifique (14) comprend un évaporateur pour l'évaporation du fluide frigorigène, un compresseur pour la compression du fluide frigorigène évaporé dans l'évaporateur, un condenseur (15) pour la condensation du fluide frigorigène comprimé dans le compresseur et un détendeur pour la détente du fluide frigorigène condensé dans le condenseur (15), où le circuit de refroidissement (16) comprend un liquide de refroidissement, une pompe (34) pour la circulation du liquide de refroidissement dans le circuit de refroidissement (16) et un refroidisseur (19) pour le refroidissement du liquide de refroidissement et où le condenseur (15) et le refroidisseur (19) sont disposés pour l'afflux d'air de refroidissement (K) dans une direction d'afflux (A),
**caractérisée en ce que**
le refroidisseur (19), vu dans la direction d'afflux de l'air de refroidissement (K), est prévu au moins par sections devant au moins une section du condenseur (15).

2. Machine frigorifique de transport selon la revendication 1,
**caractérisée en ce que**
l'unité électronique (17) comprend au moins un chargeur (29) et/ou un convertisseur de fréquence (30).

3. Machine frigorifique de transport selon la revendication 2,
**caractérisée en ce que**
le chargeur (29) a un régulateur de charge et un bloc d'alimentation et/ou que le convertisseur de fréquence (30) est un convertisseur de fréquence bidirectionnel (30).

4. Machine frigorifique de transport selon l'une des revendications 1 à 3,
**caractérisée en ce que**
le refroidisseur (19) et le condenseur (15) sont prévus côté aspiration d'au moins un ventilateur, ventilateur axial (22), pour aspirer l'air de refroidissement (K) respectivement au moins partiellement à travers le refroidisseur (19) et le condenseur (15).

5. Machine frigorifique de transport selon l'une des revendications 1 à 4,
**caractérisée en ce que**
le refroidisseur (19) et/ou le condenseur (15) est formé au moins essentiellement de tubes (27,28) reliés les uns aux autres, parallèles et espacés les uns des autres et que, de préférence, les tubes parallèles (27,28) du refroidisseur (19) et/ou du condenseur (15) sont disposés dans plusieurs plans disposés les uns derrière les autres dans la direction d'afflux (A) de l'air de refroidissement (K).

6. Machine frigorifique de transport selon la revendication 5,
**caractérisée en ce que**
les plans du refroidisseur (19) et du condenseur (15) formés par les tubes parallèles (27,28) sont disposés parallèlement les uns aux autres.

7. Machine frigorifique de transport selon l'une des revendications 1 à 6,
**caractérisée en ce que**
le refroidisseur (19) et le condenseur (15), vus dans la direction d'afflux (A), sont prévus de manière à se recouvrir au moins essentiellement et/ou le condenseur (15) est disposé uniquement par sections derrière le refroidisseur (19) dans la direction d'afflux (A).

8. Machine frigorifique de transport selon l'une des revendications 1 à 7,
**caractérisée en ce que**
le refroidisseur (19) et le condenseur (15) ont au moins essentiellement la même largeur et/ou que le refroidisseur (19) et le condenseur (15) ont une hauteur différente.

9. Machine frigorifique de transport selon l'une des revendications 1 à 8,
**caractérisée en ce que**
le liquide de refroidissement du circuit de refroidissement (16) est au moins essentiellement de l'eau et/ou que le fluide frigorigène du circuit frigorifique (14) est un fluide frigorigène synthétique.

10. Véhicule utilitaire (1), en particulier camion, remorque ou semi-remorque, avec une carrosserie caisse (5) et une machine frigorifique de transport (12) prévue sur une paroi frontale (6) de la carrosserie caisse (5) pour refroidir au moins un espace de chargement (11) prévu dans la carrosserie caisse (5),
**caractérisé en ce que**
la machine frigorifique de transport (12) est formée selon l'une des revendications 1 à 9.

11. Véhicule utilitaire selon la revendication 10,
**caractérisé en ce que**
une batterie (31) pour l'alimentation en tension de la machine frigorifique de transport (12) et/ou pour le stockage d'énergie électrique est prévue en dessous de la carrosserie caisse (5).

12. Véhicule utilitaire selon la revendication 10 ou 11,
**caractérisé en ce que**
une prise triphasée (33) pour le fonctionnement de la machine frigorifique de transport (12) et/ou pour le stockage d'énergie électrique dans la batterie (31) est prévue.

13. Véhicule utilitaire selon l'une des revendications 10 à 12,
**caractérisé en ce que**
un essieu (4) du véhicule utilitaire (1) couplé à un générateur (32) est prévu pour générer un courant électrique pendant la marche du véhicule utilitaire (1) et que, de préférence, le convertisseur de fréquence (30) est prévu pour convertir la tension alternative générée du générateur (32) associé à l'essieu (4) en une tension alternative avec une fréquence constante et/ou en une tension continue.

14. Véhicule utilitaire selon l'une des revendications 10 à 13,
**caractérisé en ce que**
la tension entre la batterie (31), le chargeur (29) et/ou le convertisseur de fréquence (30) est entre 500 V et 900 V, de préférence entre 600 V et 800 V, en particulier entre 650 V et 750 V.
